(19) Europäisches Patentamt
European Patent Office
Office européen des brevets

(11) **EP 3 171 430 B1**

(12) **EUROPEAN PATENT SPECIFICATION**

(45) Date of publication and mention
of the grant of the patent:
**19.05.2021 Bulletin 2021/20**

(21) Application number: **15821735.6**

(22) Date of filing: **09.07.2015**

(51) Int Cl.:
*H01M 4/38* (2006.01)      *H01M 4/136* (2010.01)
*H01M 4/36* (2006.01)      *H01M 4/62* (2006.01)
*H01M 10/052* (2010.01)    *H01M 4/04* (2006.01)
*H01M 4/1397* (2010.01)    *H01M 4/58* (2010.01)
*H01M 4/02* (2006.01)

(86) International application number:
**PCT/JP2015/069757**

(87) International publication number:
**WO 2016/009936 (21.01.2016 Gazette 2016/03)**

(54) **ELECTRODE MATERIAL, LITHIUM-SULFUR BATTERY ELECTRODE, LITHIUM-SULFUR BATTERY AND BATTERY MATERIAL PRODUCTION METHOD**

ELEKTRODENMATERIAL, ELEKTRODE FÜR LITHIUM-SCHWEFEL-BATTERIE, LITHIUM-SCHWEFEL-BATTERIE UND BATTERIEMATERIALHERSTELLUNGSVERFAHREN

MATÉRIAU D'ÉLECTRODE, ÉLECTRODE DE BATTERIE AU LITHIUM-SOUFRE, BATTERIE AU LITHIUM-SOUFRE ET PROCÉDÉ DE PRODUCTION DE MATÉRIAUX DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2014 JP 2014144789**

(43) Date of publication of application:
**24.05.2017 Bulletin 2017/21**

(73) Proprietor: **Toray Industries, Inc.**
**Tokyo 103-8666 (JP)**

(72) Inventors:
• **The inventors have waived their right to be thus mentioned.**

(74) Representative: **Mewburn Ellis LLP**
**Aurora Building**
**Counterslip**
**Bristol BS1 6BX (GB)**

(56) References cited:
WO-A1-2012/131628      WO-A1-2014/112401
JP-A- 2010 095 390      JP-A- 2013 212 975
US-A1- 2009 176 079     US-A1- 2011 165 466
US-A1- 2012 251 889     US-A1- 2014 057 179

• **ZHANG B ET AL: "Enhancement of long stability of sulfur cathode by encapsulating sulfur into micropores of carbon spheres", ENERGY & ENVIRONMENTAL SCIENCE, , vol. 3, no. 10 16 August 2010 (2010-08-16), pages 1531-1537, XP002761361, ISSN: 1754-5692, DOI: 10.1039/C002639E Retrieved from the Internet: URL:http://pubs.rsc.org/en/content/article pdf/2010/EE/C002639E**

**EP 3 171 430 B1**

**Description**

TECHNICAL FIELD

The present invention relates to an electrode material including sulfur, and particularly to a lithium-sulfur battery electrode material.

BACKGROUND ART

A lithium secondary battery having a high battery voltage and high energy density receives attention from the standpoint of an energy storage system noting renewable energy and from the standpoint of development of personal computers, cameras, mobile equipment and the like, and research and development thereof is actively progressed.
In recent years, in order to respond to requirement of higher capacity, research and development of a lithium-sulfur secondary battery in which sulfur alone is used for a positive electrode active material and lithium is used for a negative electrode active material, is activated. Theoretical capacity density of sulfur is about 1672 mAh/g, and an electrode having higher capacity than a cathode for existing lithium secondary batteries, can be produced.
However, the current state is that the lithium-sulfur secondary battery cannot be put to practical use at the present stage because of a low utilization factor as a positive electrode active material of sulfur or because of poor charge-discharge cycle characteristics.
The main reason why the utilization factor of sulfur is low is supposedly that a reduced sulfide $Li_2S_x$ is dissolved in an electrolytic solution, and that a dissolved sulfide is deposited when the dissolved sulfide becomes $Li_2S$ to damage an electrode. Further, the reason is also supposedly that sulfur is an insulator and that a polysulfide is dissolved in an electrolytic solution.
In order to solve these problems, it is proposed, for example, to fill sulfur into the porous carbon material such as activated carbon (e.g., Patent Document 1). By filling sulfur into pores which the carbon material has, it is possible to facilitate transfer of electrons. Further, by retaining sulfur in the voids of the porous carbon material, it is possible to prevent a sulfide produced from flowing out of the voids. It is still desired to improve on low use efficiency of sulfur and significant reduction in performance.
Hence, a porous carbon material having a specific surface area of 200 to 4500 m2/g and a pore volume of 0.5 to 4.0 cc/g is proposed (e.g., Patent Document 2). By increasing the specific surface area, it is possible to increase a contact area between carbon and sulfur and increase an amount of sulfur to be filled due to a large volume of pores.
Further, as the porous carbon material, for example, a porous carbon material having nano pores and nano channels, respectively having sizes of 1 to 999 nm, is proposed (e.g., Patent Document 3). The nano pore is communicated with the nano channel, and when sulfur is partially filled into these nano portions, an electrolyte can be diffused and migrated to reach sulfur, and therefore the use efficiency of sulfur can be increased.

Patent Document 1:JP2003-197196 ; Patent Document 2 : JP2013-143298 ; and Patent Document 3 : JP2013-118191.
Zhang et al. described a battery cathode material composite prepared by encapsulating sulfur into micropores of carbon spheres. (Energy Environ. Sci., 2010, 3, pp1531-1537.

WO2012/131628 describes a cathode material comprising particulate carbon material and sulfur. A particulate porous material comprises a carbon phase and at least one pore phase arranged in the carbon phase, the carbon phase of the particles forming, with the pore phase, essentially co-continuous, irregular phase domains. US 2012/0251889 describes similar materials and refers to essentially unordered co-continuous phase domains.
US2014/0057179 describes a battery electrode composition comprising composite particles and a scaffolding mixture.

PROBLEMS TO BE SOLVED BY THE INVENTION

The electrode material described in Patent Document 2 has a problem of trade-off that in a material having a large specific surface area, the pore diameter is small and a sulfur-filling ratio is lowered, and conversely in a material having a small specific surface area, the sulfur-filling ratio is high but a contact area between sulfur and carbon is small, and therefore desired performance cannot be exerted. The present inventors thought the electrode material to have a problem that since pores are not communicated with one another as with the activated carbon described in Patent Document 1, the use efficiency is decreased when the amount of sulfur to be filled is increased.
However, the electrode material described in Patent Document 3 has not solved a problem that the use efficiency is decreased when the amount of sulfur to be filled is increased although the nano pore and the nano channel are communicated with each other. The present inventors thought that although the nano pore and the nano channel are communicated with each other, this state is not sufficient, and therefore sulfur may cause a blockage within a nano pore portion when a filling ratio of sulfur is increased, resulting in insufficient diffusibility of the electrolyte.

As described above, since conventional sulfur-containing electrode materials cannot pursue a high specific surface area and a high pore volume simultaneously or it becomes unable to secure a path through which an electrolyte can reach as sulfur is filled resulting in a reduction in use efficiency, the conventional sulfur-containing electrode materials have not been unable to exert adequate performance. It is an object of the present invention to solve these problems.

SOLUTIONS TO THE PROBLEMS

The present inventors noted a structure of the electrode material as described above. Further, the present inventors thought that an irregular structure such as a structure in which separate particles are aggregated and combined like the electrode material described in Patent Document 3, or a structure formed of voids generated by conversely removing the aggregated/combined mold particles and a skeleton around the voids, is not suitable.

The present invention provides an electrode material as defined in the accompanying claim 1. It pertains to an electrode material containing sulfur, and a carbon material having a co-continuous structure portion in which a carbon skeleton and voids form a continuous structure having a structural period of 0.002 $\mu$m to 3 $\mu$m and having fine pores having a diameter of 0.01 to 10 nm present at the surface; wherein a pore volume of the carbon material is 0.5 cm$^3$/g or more; and a BET specific surface area of the carbon material is 300 m$^2$/g or more.

In the electrode material of the present invention, by simultaneous pursuit of a high specific surface area and a high pore volume of the co-continuous structure portion, a contact area between carbon and sulfur increases and high charge-discharge characteristics can be exerted. Moreover, since a portion other than the carbon skeleton adequately continues as a void, an electrolyte can rapidly move even when sulfur is filled, resulting in no reduction in use efficiency and this enables to adequately exert performance. Further, since the carbon skeletons are continued, the electrical conductivity can be enhanced. In addition to these, an effect in which the carbon skeletons support one another to maintain the structural body is produced, and due to this effect, the material has resistance to some extent to deformations such as ones caused by compression or the like.

BRIEF DESCRIPTION OF THE DRAWING

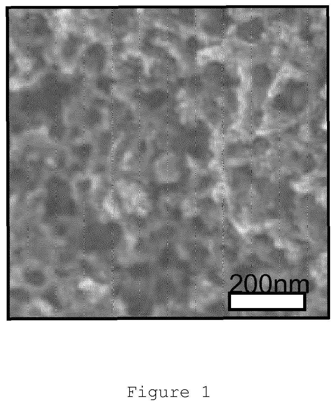

Fig. 1 illustrates a scanning electron photomicrograph of a porous carbon material in Example 1.

EMBODIMENTS OF THE INVENTION

<Electrode Material>

[Carbon Material]

The carbon material used in the electrode material of the present invention (hereinafter, sometimes referred to as "the carbon material of the present invention" for convenience) has a co-continuous structure portion in which a carbon skeleton and voids each form a continuous structure. That is, when for example, a specimen adequately cooled in liquid nitrogen is split with tweezers or the like and surface of the resulting cross-section is observed with a scanning electron microscope (SEM) or the like, a carbon skeleton and voids which are formed as a portion other than the skeleton take on a co-continuous structure, and specifically, the carbon material has a portion observed as a structure in which a carbon skeleton and voids are respectively continued inward, as illustrated in the scanning electron photomicrograph of the carbon material of Example 1 of FIG. 1.

In the carbon material of the present invention, it is possible to exhibit a rapid movement characteristic of the electrolyte by filling and/or passing an electrolytic solution into or through the voids of the co-continuous structure portion. Furthermore, since the carbon skeletons are continued, the carbon material has higher electrical conductivity and thermal conductivity. Accordingly, a material which is low in resistance and has less loss as a battery material, can be provided. Further, it is also possible to rapidly transfer the heat to and from outside the system to keep high temperature-uniformity. In addition to these, an effect in which carbon portions support one another to maintain the structural body is produced, and due to this effect, the material has large resistance to deformations such as ones caused by tension or compression.

Examples of these co-continuous structures include the form of a grid and the form of a monolith. These co-continuous structures are not particularly limited; however, the form of a monolith is preferred in point of being able to exert the above-mentioned effect. The form of a co-continuous structure referred to in the present invention refers a form in which the carbon skeleton forms a three-dimensional network structure and is distinguished from an irregular structure such as a structure in which separate particles are aggregated and combined or a structure formed of voids generated by conversely removing the aggregated/combined mold particles and a skeleton around the voids.

Further, the co-continuous structure portion in the carbon material of the present invention has a structural period of 0.002 $\mu$m to 3 $\mu$m. In the present invention, the structural period is determined by irradiating a specimen of the carbon material of the present invention with X-rays having a wavelength $\lambda$ by the X-ray scattering method and calculating a structural period from the scattering angle $\theta$ corresponding to a local maximal value of peaks of the scattering intensity, using the following equation. When the structural period exceeds 1 $\mu$m and the scattering intensity peak of the X-ray cannot be observed, the co-continuous structure portion of the porous carbon material is three-dimensionally photographed by an X-ray CT method, Fourier-transform is applied to the resulting image to obtain a spectrum, and the structural period is similarly calculated. That is, the spectrum referred to in the present invention is data representing a relationship between the one-dimensional scattering angle and the scattering intensity which is obtained by the X-ray scattering method or obtained by the Fourier-transform from the X-ray CT method.

$$L = \lambda/(2\sin\theta)$$

Structural period: L, $\lambda$: wavelength of incident X-rays, $\theta$: scattering angle corresponding to a local maximal value of peak values of the scattering intensity

When the structural period of the co-continuous structure is 0.002 $\mu$m or more, an electrolytic solution can be filled into and/or flown through a void portion, and electrical conductivity and thermal conductivity can be improved through the carbon skeleton. The structural period is preferably 0.01 $\mu$m or more, and more preferably 0.1 $\mu$m or more. When the structural period is 3 $\mu$m or less, a high surface area and high properties can be attained. The structural period is preferably 2 $\mu$m or less, and more preferably 1 $\mu$m or less. In addition, in performing analysis of the structural period by an X-ray, the portion not having the co-continuous structure does not have the effect on the analysis because the structural period is out of the above-mentioned range. Accordingly, the structural period calculated by the above-mentioned equation is taken as a structural period of a co-continuous structure-forming portion.

Further, the co-continuous structure portion preferably has an average porosity of 10 to 80%. The term "average porosity" refers to a porosity determined by obtaining a precisely formed cross-section of an embedded specimen by the cross-section polisher method (CP method), examining the cross-section at a magnification regulated so as to result in 1$\pm$0.1 (nm/pixel) and at a resolution of 700000 pixels or higher, setting in the resultant image a square examination region for calculation in which each side has 512 pixels, and calculating the average porosity using the following equation, in which A is the area of the examination region and B is the area of the pores.

$$\text{Average porosity (\%)} = B/A \times 100$$

The higher the average porosity thereof is, the more a movement of an electrolyte is rapid, and the lower the average porosity is, the higher the resistance to forces applied in cross-sectional directions is, such as compression and bending, and hence the more the material is advantageous in terms of handleability and use under pressure. In view of these, the average porosity of the co-continuous structure portion is preferably 15 to 75%, and even more preferably 18 to 70%.

Moreover, the carbon material of the present invention has fine pores having the average diameter of 0.01 to 10 nm at the surface thereof. By having fine pores having the above average diameter, it is possible to efficiently adsorb sulfur or a sulfur compound to allow an electrochemical reaction to efficiently proceed. The term "surface" refers to all surfaces, in contact with the outside, of the porous carbon material including the surface of a carbon skeleton in the co-continuous structure portion of the carbon material. The fine pore can be formed at the surface of a carbon skeleton in the co-continuous structure portion and/or in a portion not substantially having the co-continuous structure described later. The fine pore is preferably formed at least at the surface of a carbon skeleton in the co-continuous structure portion.

Sulfur described later is preferably contained in the voids of the co-continuous structure portion of the carbon material or in the fine pores at the surface, and preferably contained particularly at least in the fine pores at the surface. By containing sulfur in the fine pores at the surface, reduction in power or a failure of an electrode due to sulfur effluence or the like, or the effect on rapid transfer of electrons can be expected. Moreover, since voids communicated with one another exist, diffusion or migration to sulfur of the electrolyte can be rapidly performed.

The average diameter of such fine pores at the surface is preferably 0.1 nm or more, and more preferably 0.5 nm or more . Further, the average diameter is preferably 5 nm or less, and more preferably 2 nm or less.

Moreover, the pore volume of the carbon material of the present invention is 0.5 $cm^3$/g or more. The pore volume is more preferably 1.0 $cm^3$/g or more, and even more preferably 1.5 $cm^3$/g or more. When the pore volume is 0.5 $cm^3$/g or more, much sulfur can be filled into fine pores . An upper limit of the pore volume is not particularly limited, and when the pore volume is set to 10 $cm^3$/g or less, strength is improved, a fine pore is hardly collapsed and good handleability can be maintained.

In addition, as the average diameter and pore volume of the fine pores in the carbon material of the present invention, values measured by either of a BJH method or a MP method are used. That is, if even either of a measured value by the BJH method or a measured value by the MP method falls within a range of 0.01 to 10 nm, it is judged to have fine pores having the average diameter of 0.01 to 10 nm at the surface of the carbon material. While an appropriate method varies depending on the sizes of diameters (e.g., the appropriate method varies at a diameter of 2 nm as a boundary, as described later), in the present invention, a value determined by either method have only to be in the range of the present invention.

The BJH method and the MP method are a method widely used as a pore size distribution analytical method, and the pore size distribution can be determined based on a desorption isotherm determined by adsorption/desorption of nitrogen on the electrode material. The BJH method is a method of analyzing a distribution of a pore volume with respect to a diameter of a fine pore assumed to be cylindrical according to a standard model of Barrett-Joyner-Halenda, and is mainly applicable to fine pores having a diameter of 2 to 200 nm (refer to J. Amer. Chem. Soc., 73, 373, 1951 etc. in detail). The MP method is a method in which an external surface area and an adsorption layer thickness (corresponding a pore radius since a pore shape is assumed as to be cylindrical) of each section of an adsorption isotherm is determined from a change in the slope of a tangent line at each point of the isotherm, and a pore volume is determined based on this and plotted with respect to the adsorption layer thickness to obtain a pore size distribution (refer to Journal of Colloid and Interface Science, 26, 45, 1968 etc. in detail), and this method is mainly applicable to fine pores having a diameter of 0.4 to 2 nm.

In addition, in the carbon material of the present invention, there is a possibility that the voids of the co-continuous structure portion have the effect on a pore size distribution or a pore volume which are measured by the BJH method or the MP method. That is, there is a possibility that these measured values are obtained as a value reflecting not only purely fine pores but also existence of voids. However, in even such a case, measured values determined by these methods are considered as the pore diameter and the pore volume in the present invention.

Further, the carbon material of the present invention has a BET specific surface area of 300 $m^2$/g or more. The BET specific surface area is more preferably 1000 $m^2$/g or more, furthermore preferably 1500 $m^2$/g or more, and even more preferably 2000 $m^2$/g or more. When the BET specific surface area is 100 $m^2$/g or more, an area relative to the electrolyte is increased, and therefore performance is improved. An upper limit of the BET specific surface area is not particularly limited, and when the BET specific surface area is in a range of 4500 $m^2$/g or less, strength of the electrode material can be maintained, and excellent handleability can be maintained. In addition, the BET specific surface area in the present invention can be determined by measuring an adsorption isotherm by adsorption/desorption of nitrogen on the carbon material according to JIS R 1626 (1996) and calculating the measured data based on a BET equation.

In addition, numerical value ranges of the structural period, the specific surface area, the pore volume and the porosity in the present invention are basically values in a state before including sulfur as described later. With respect to the electrode material having contained sulfur, whether values measured after removing sulfur to a level 0.1 wt% or less by a means such as heating or solvent extraction are applied or not-applied to the numerical value range, is determined.

It is also a preferred embodiment that the electrode material of the present invention includes a portion not substantially having the co-continuous structure (hereinafter, sometimes referred to as merely "portion not having the co-continuous structure"). The term "portion not substantially having the co-continuous structure" means that a portion in which no distinct voids are observed because of having a size less than the resolution exists in an area larger than a square region in which a side corresponds to 3 times of the structural period L calculated by the X-ray as described later when a cross-section formed by the cross-section polisher method (CP method) is examined at a magnification resulting in $1\pm0.1$ (nm/pixel).

Since carbon is closely packed in the portion not substantially having the co-continuous structure, the portion has high electrical and thermal conductivity because of ease of electron transfer. Because of this, the electrical conductivity and thermal conductivity can be maintained at a certain level or higher, and it is possible to rapidly discharge the heat of reaction from the system and to keep the resistance to electron transfer low. Further, the presence of the portion not having the co-continuous structure enables the resistance to compression failure to enhance. It is preferred that the proportion of the portion not having the co-continuous structure is set to 5% by volume or more, since doing so is effective in maintaining the electrical conductivity and thermal conductivity at a high level.

The shape of the carbon material of the present invention is not particularly limited, and examples thereof include a bulk shape, rod shape, flat plate shape, disk shape, and spherical shape. Of these, the carbon material is preferably in the form of a fiber, film, or particle. When the carbon material is in the form of a fiber or a film, it is preferred in that an electrode not using a binder can be formed, and on the other hand, when the carbon material is in the form of a particle, it is preferred in point of excellent handleability.

The term "in the form of a fiber" refers to a shape in which the average length is at least 100 times longer than the average diameter. The material may be filaments or long fibers, or may be staples, short fibers, or chopped strands.

The shape of the cross-section thereof is not limited at all, and the cross-section can have any shape such as a round cross-section, a multi-leafed cross-section, e.g., triangular cross-section, a flat cross-section, or a hollow cross-section.

The average diameter of the fibers is not particularly limited, and can be determined arbitrarily in accordance with applications. The average diameter thereof is preferably 10 nm or more from the standpoint of maintaining the handleability and porousness. Further, from the standpoint of ensuring flexural rigidity to improve the handleability, the average diameter thereof is preferably 500 $\mu$m or less.

In the case of the form of a film, the thickness is not particularly limited and can be determined arbitrarily in accordance with applications. The thickness is preferably 10 nm or more when handleability is taken into account, and is preferably 5000 $\mu$m or less from the standpoint of preventing damages due to flexing.

In the case of the form of a particle, when the average particle size is in the range of 1 $\mu$m to 1 mm, it is preferred since handling is easy. Setting the average particle size to 1 $\mu$m or more facilitates the formation of the co-continuous structure. The average particle size is more preferably 2 $\mu$m or more, and even more preferably 5 $\mu$m or more. Further, by setting the average particle size to 10 $\mu$m or less, a smooth and high-density electrode can be formed. The average particle size is more preferably 8 $\mu$m or less.

[Sulfur]

In the present invention, sulfur includes not only elementary sulfur but also a sulfur compound. Examples of the sulfur compounds include, but are not limited to, disulfides, poly(disulfides), polysulfides, thiols and modified products thereof.

It is preferred that the electrode material of the present invention includes sulfur in the voids of the co-continuous structure portion of the carbon material or in the fine pores at the surface, and includes sulfur particularly at least in the fine pores at the surface. Sulfur may be fully filled into the fine pores at the surface. It is preferred that voids, communicated with one another, of the co-continuous structure portion remain because diffusion or migration of the electrolyte is improved. From this standpoint, the proportion of sulfur is preferably set to 1 to 97% by volume in a volume of the voids determined by a method of measuring porosity of the carbon material, described later.

[Electrode]

The electrode of the present invention includes the electrode material of the present invention, and specifically, it is one obtained by mixing an electrical conducting material, a binder and the like as required with the electrode material of the present invention, and forming a layer of the resulting mixture as an active material layer on a current collector. The electrode is preferably used particularly as a positive electrode of a lithium-sulfur battery.

The electrical conducting material is not particularly limited, and it is possible to use, for example, one of or a mixture of two or more of graphites such as natural graphite and artificial graphite, acetylene black, carbon black, Ketjen Black, carbon whisker, needle cokes, carbon fiber, and metals (copper, nickel, aluminum, silver, gold, etc.). Among these materials, carbon black, Ketjen Black and acetylene black are preferred as the electrical conducting material from the standpoint of electronic conductivity and coating properties.

Further, examples of the binder include rubber-based binders such as styrene-butadiene rubber (SBR) and acrylonitrile-butadiene rubber (NBR); fluorine-based resin such as polytetrafluoroethylene and polyvinylidene fluoride; polypropylene, polyethylene, and fluorine-modified (meth) acrylic binder. A usage of the binder is not particularly limited, and it is preferably 1 to 20% by mass, and more preferably 2 to 10% by mass.

The active material layer constituting the electrode may contain a thickener such as carboxymethyl cellulose or salt thereof, methyl cellulose, hydroxymethyl cellulose, ethyl cellulose, hydroxypropyl cellulose or polyvinyl alcohol.

A thickness of the active material layer is not particularly limited, and it is usually 5 to 500 $\mu$m, preferably 10 to 200 $\mu$m, and particularly preferably 10 to 100 $\mu$m.

[Lithium-Sulfur Battery]

In the lithium-sulfur battery of the present invention, a positive electrode includes the above-mentioned electrode material of the present invention and a negative electrode is formed of a material adsorbing/releasing lithium. Other members are not particularly limited, and examples thereof are described below.

As the negative electrode, one in which a negative electrode active material, an electrical conducting material and a binder are applied onto the surface of a current collector, is commonly used. A material adsorbing/releasing lithium is used for the negative electrode active material, and one including metal or metal ions is preferably used. Examples of the material adsorbing/releasing lithium include metallic lithium and lithium alloys, metal oxides, metal sulfides, and carbonaceous substances adsorbing/releasing lithium. Examples of the lithium alloy include alloys of lithium and aluminum, silicon, tin, magnesium, indium, or calcium. Examples of metal oxides include tin oxide, silicon oxide, lithium-titanium oxide, niobium oxide, and tungsten oxide. Examples of metal sulfides include tin sulfide and titanium sulfide. Examples of the carbonaceous substances adsorbing/releasing lithium include graphite, cokes, mesophase pitch-based carbon fiber, spherical carbon, and resin-burned carbon.

As a separator, an organic or inorganic porous sheet is generally used.

Further, when the electrolytic solution is interposed at least between the positive electrode and the separator, it is preferred because polysulfide ions, sulfide ions or sulfur molecules produced at the positive electrode are dissolved in the electrolytic solution and efficiency of active material supply become better. The electrolytic solution does not always have to be present between the negative electrode and the separator. However, in the case where condition of contact between solid substances is not favorable, it is preferred that the electrolytic solution is interposed between the negative electrode and the separator since there is an effect of enabling to improve ion conduction by the electrolytic solution.

The electrolytic solution may be a solution formed by dissolving a lithium salt in a solvent. The lithium salt is not particularly limited as long as it is one used for ordinary lithium ion secondary batteries, and for example, publicly known lithium salts, such as $Li(CF_3SO_2)_2N$, $Li(C_2F_5SO_2)_2N$, $LiPF_6$, $LiClO_4$ and $LiBF_4$, can be used. These lithium compounds may be used singly or may be used as a mixture of a plurality of lithium compounds.

A solvent of the electrolytic solution is not particularly limited as long as it is one which is non-proton-donating and is used for ordinary lithium ion secondary batteries, and for example, ethers such as dimethoxyethane (DME), triglyme and tetraglyme; cyclic ethers such as dioxolane (DOL) and tetrahydrofuran; or mixtures thereof are preferably used. Further, an ionic liquid of 1-propenyl-3-methylimidazolium bis(trifluorosulfonyl)imide, 1-ethyl-3-methylimidazolium tetrafluoroborate or the like can also be used. The electrolytic solution may be interposed at least between the positive electrode and the separator, and may be gelated by including an electrolytic solution containing a supporting salt in polymers such as polyvinylidene fluoride, polyethylene oxide, polyethylene glycol or polyacrylonitrile, or saccharides such as amino acid derivatives, sorbitol derivatives or the like. In the sulfur battery, since the amount of the active material which can be effectively used may be reduced due to the dissolution of the active material (sulfur, polysulfide ions) in a solution, polysulfide ions or the like may be added to the electrolytic solution in advance.

A shape of the lithium-sulfur battery of the present invention is not particularly limited, and examples thereof include a coin shape, a button shape, a sheet shape, a laminate shape, a cylindrical shape, a flat shape, a box shape and the like.

<Production Method of Electrode Material>

The electrode material of the present invention can be produced, for example, by a step in which 10 to 90 wt% of a carbonizable resin and 90 to 10 wt% of an eliminable resin are brought into a compatibly mixed state by dissolving them in the same solvent to obtain a resin mixture (step 1); a step in which the resin mixture in a compatibly mixed state is caused to undergo phase separation and the separated phases are fixed (step 2) ; a step in which the fixed material is carbonized by pyrolysis under heat (step 3); and a step in which a carbonized product is caused to contain sulfur (step 4). Further, the step 4 can be performed after undergoing a step of activating a carbide as required.

[Step 1]

The step 1 is a step in which 10 to 90 wt% of a carbonizable resin and 90 to 10 wt% of an eliminable resin are brought into a compatibly mixed state to obtain a resin mixture.

Herein, the carbonizable resin is a resin which carbonizes upon pyrolysis and remains as a carbon material, and a resin having the carbonization yield of 40% or more is preferred. For example, both a thermoplastic resin and a thermosetting resin can be used as the carbonizable resin. Examples of the thermoplastic resin include polyphenylene oxide, polyvinyl alcohol, polyacrylonitrile, phenolic resins, and wholly aromatic polyesters. Examples of the thermosetting resin include unsaturated polyester resins, alkyd resins, melamine resins, urea resins, polyimide resins, diallyl phthalate resins, lignin resins, and urethane resins. Polyacrylonitrile and phenolic resins are preferred, and polyacrylonitrile is more preferred from the standpoints of cost and productivity. Particularly, in the present invention, it is a preferred embodiment to use polyacrylonitrile since a high specific surface area is attained even in the polyacrylonitrile. These resins may be used either alone or in a mixed state. The carbonization yield referred to herein means a yield obtained by measuring changes in weight of a resin at the time of raising a temperature at a rate of 10°C/min in a nitrogen atmosphere by a thermogravimetric (TG) technique, and dividing a difference between a weight at room temperature and a weight at 800°C by the weight at room temperature.

Meanwhile, the eliminable resin is a resin which can be removed after the step 2 to be described later, and can be preferably removed in at least any of the following stages: simultaneously with a treatment for imparting infusibility; after the treatment for imparting infusibility; and simultaneously with the pyrolysis. A removal rate of a resin is preferably 80 wt% or more, and more preferably 90 wt% or more when the resin finally becomes a carbon material. A method of removing the eliminable resin is not particularly limited, and suitable methods include: a method in which the eliminable resin is chemically removed, for example, by conducting depolymerization using a chemical; a method in which the eliminable resin is removed by a solvent capable of dissolving the eliminable resin; and a method in which the resin mixture is heated to lower the molecular weight of the eliminable resin by thermal decomposition, thereby removing the eliminable resin. These techniques can be used alone or in combination thereof, and in the case of using a combination, the techniques may be simultaneously performed or separately performed.

As the method in which the resin is chemically removed, a method in which the resin is hydrolyzed using an acid or an alkali is preferred from the standpoints of economic efficiency and handleability. Examples of resins which are susceptible to hydrolysis by acids or alkalis include polyesters, polycarbonates, and polyamides.

Preferred examples of the method in which the eliminable resin is removed by a solvent capable of dissolving the eliminable resin include: a method in which the solvent is continuously supplied to the carbonizable resin and eliminable resin which have been mixed, thereby dissolving and removing the eliminable resin; and a method in which the solvent and the resins are mixed batchwise to dissolve and remove the eliminable resin.

Specific examples of the eliminable resin which are suitable for the method of removing by a solvent include polyolefins such as polyethylene, polypropylene, and polystyrene, acrylic resins, methacrylic resins, polyvinylpyrrolidone, aliphatic polyesters, and polycarbonates. Particularly, from a standpoint of solubility in a solvent, such an eliminable resin is more preferably an amorphous resin, and examples thereof include polystyrene, methacrylic resins, polycarbonates, and polyvinylpyrrolidone.

Examples of the method in which the eliminable resin is lowered in molecular weight by thermal decomposition and removed thereby include: a method in which the carbonizable resin and eliminable resin which have been mixed are heated batchwise to decompose the eliminable resin; and a method in which the carbonizable resin and eliminable resin which have been continuously mixed are continuously supplied to a heating source and heated to thereby decompose the eliminable resin.

The eliminable resin is preferably, among these resins, a resin which is eliminated by thermal decomposition in carbonizing the carbonizable resin by pyrolysis in the step 3 described later. Further, the eliminable resin is preferably a resin which does not undergo a large chemical change when the carbonizable resin is subjected to the treatment for imparting infusibility described later, and which, after pyrolysis, gives a carbonization yield of less than 10%. Specific examples of such eliminable resins include polyolefins such as polyethylene, polypropylene, and polystyrene, acrylic resins, methacrylic resins, polyacetals, polyvinylpyrrolidone, aliphatic polyesters, aromatic polyesters, aliphatic polyamides, and polycarbonates. These resins may be used either alone or in a mixed state.

In the step 1, the carbonizable resin and the eliminable resin are brought into a compatibly mixed state to obtain a resin mixture (polymer alloy). The expression "brought into a compatibly mixed state" herein means that by suitably selecting conditions regarding temperature and/or solvent, a state that no structure in which the carbonizable resin and the eliminable resin are present as separate phases is observed with an optical microscope, is produced.

The carbonizable resin and the eliminable resin may be brought into a compatibly mixed state by mixing the resins alone with each other or by further adding a solvent thereto.

Examples of a system in which a plurality of resins have been brought into a compatibly mixed state include: a system which shows a phase diagram of the upper-limit critical solution temperature (UCST) type in which the resins are in a phase-separated state at low temperatures but form a single phase at high temperatures; and a system which conversely shows a phase diagram of the lower-limit critical solution temperature (LCST) type in which the resins are in a phase-separated state at high temperatures but form a single phase at low temperatures. Furthermore, particularly in the case of a system in which at least one of the carbonizable resin and the eliminable resin has been dissolved in a solvent, preferred examples include one in which the phase separation described later is induced by the infiltration of a nonsolvent.

The solvent to be added is not particularly limited. Preferred is such a solvent that the absolute value of the difference between the solubility parameter (SP value) thereof and the average of the SP values of the carbonizable resin and eliminable resin is 5.0 or less, the absolute value being an index to dissolving properties. It is known that the smaller the absolute value of the difference from the average of the SP values is, the higher the dissolving properties is, and therefore it is preferred that the difference is zero. Meanwhile, the larger the absolute value of the difference from the average of the SP values is, the lower the dissolving properties is and the more the compatibly mixed state of the carbonizable resin and eliminable resin is difficult to attain. In view of this, the absolute value of the difference from the average of the SP values is preferably 3.0 or less, and most preferably 2.0 or less.

Specific examples of combinations of the carbonizable resin and eliminable resin to be brought into a compatibly mixed state, in the case where the system contains no solvent, include polyphenylene oxide/polystyrene, polyphenylene oxide/styrene-acrylonitrile copolymer, wholly aromatic polyester/polyethylene terephthalate, wholly aromatic polyester/polyethylene naphthalate, and wholly aromatic polyester/polycarbonate. Specific examples of the combinations, in the case where the system contains a solvent, include polyacrylonitrile/polyvinyl alcohol, polyacrylonitrile/polyvinylphenol, polyacrylonitrile/polyvinylpyrrolidone, polyacrylonitrile/polylactic acid, polyvinyl alcohol/vinyl acetate-vinyl alcohol copolymer, polyvinyl alcohol/polyethylene glycol, polyvinyl alcohol/polypropylene glycol, and polyvinyl alcohol/starch.

Methods for mixing the carbonizable resin with the eliminable resin are not limited, and various publicly known mixing techniques can be employed so long as even mixing is possible therewith. Specific examples thereof include a rotary mixer having stirring blades and a kneading extruder with screws.

It is also a preferred embodiment that the temperature (mixing temperature) at which the carbonizable resin and the eliminable resin are mixed together is not lower than a temperature at which both the carbonizable resin and the eliminable resin soften. As the temperature at which the resins soften, either the melting point of the carbonizable resin or eliminable resin in the case where the resin is a crystalline polymer or the glass transition temperature thereof in the case where the resin is an amorphous resin may be appropriately selected. By setting the mixing temperature at a temperature not lower than the temperature at which both the carbonizable resin and the eliminable resin soften, the viscosity of the two resins can be lowered and, hence, more efficient stirring and mixing are possible. There is no particular upper limit on the mixing temperature. The mixing temperature is preferably 400°C or lower from the standpoint of preventing resin deterioration due to thermal degradation, thereby obtaining a precursor for the carbon material, which has excellent quality.

In the step 1, 10 to 90 wt% of the carbonizable resin is mixed with 90 to 10 wt% of the eliminable resin. In the case where the proportions of the carbonizable resin and eliminable resin are within those ranges, an optimal void size and an optimal porosity can be arbitrarily designed, and therefore those ranges are preferred. When the proportion of the carbonizable resin is 10 wt% or more, it is possible to retain mechanical strength in the carbonized material, and it is also possible to improve yield, and therefore the proportion is preferred. Meanwhile, when the proportion of the carbonizable material is 90 wt% or less, the eliminable resin can efficiently form voids, and therefore the proportion is preferred.

A mixing ratio between the carbonizable resin and the eliminable resin can be arbitrarily selected within the above range while taking account of the compatibility of each material. Specifically, since compatibility between resins generally becomes worse as the ratio therebetween approaches 1 : 1, preferred embodiments in the case where a system having not so high compatibility has been selected as starting materials include one in which the compatibility is improved by making the mixture approach to the so-called partial composition by increasing or reducing the amount of the carbonizable resin.

In the present method a solvent is added when the carbonizable resin and the eliminable resin are mixed with each other. The addition of a solvent not only lowers the viscosity of the carbonizable resin and eliminable resin to facilitate molding but also makes the carbonizable resin and the eliminable resin easy to be brought into a compatibly mixed state. The solvent referred to herein is not also particularly limited, and any solvent which is liquid at ordinary temperature and in which both the carbonizable resin and the eliminable resin dissolve is used because the compatibility between both resins can be improved.

It is preferred that the amount of the solvent to be added is 20 wt% or more with respect to the total weight of the carbonizable resin and the eliminable resin, from the standpoints of improving the compatibility between the carbonizable resin and the eliminable resin and lowering the viscosity thereof to improve the flowability. Further, on the other hand, from the standpoint of the cost of the recovery and recycling of the solvent, the amount of the solvent to be added is preferably 90 wt% or less with respect to the total weight of the carbonizable resin and the eliminable resin.

[Step 2]

The step 2 is a step in which the resin mixture which has been brought into a compatibly mixed state in the step 1 is caused to undergo phase separation by a method accompanied with no chemical reaction to form a microstructure and the separated phases are fixed.

Phase separation of the carbonizable resin and eliminable resin which have been mixed together can be induced by various physical and chemical techniques, and examples of a method of inducing the phase separation include: a heat-induced phase separation method in which phase separation is induced by a temperature change; a nonsolvent-induced phase separation method in which phase separation is induced by adding a nonsolvent; a shear-induced phase separation method in which phase separation is induced by a physical field; an orientation-induced phase separation method; an electric field-induced phase separation method; a magnetic field-induced phase separation method; a pressure-induced phase separation method; and a reaction-induced phase separation method in which phase separation is induced using a chemical reaction. In a production method of the present invention, the reaction-induced phase separation will be excluded for a reason described later. Among these methods, the heat-induced phase separation method and the nonsolvent-induction phase separation method are preferred in point of being able to easily produce the porous carbon material of the present invention.

These phase separation methods can be used alone or in combination thereof. Specific examples of methods in the case of using a combination include: a method in which the mixture is passed through a coagulating bath to cause nonsolvent-induced phase separation and the mixture is then heated to cause heat-induced phase separation; a method in which nonsolvent-induced phase separation and heat-induced phase separation are simultaneously caused by controlling the temperature of a coagulating bath; and a method in which the material ejected from a spinning nozzle is cooled to cause heat-induced phase separation and is then brought into contact with a nonsolvent.

The expression "accompanied with no chemical reaction" in inducing the phase separation means that either of the carbonizable resin and eliminable resin which have been mixed undergoes no change in primary structure before and after the mixing. The term "primary structure" represents the chemical structure which constitutes the carbonizable resin or the eliminable resin. By being accompanied with no chemical reaction such as polymerization in inducing the phase separation, changes in characteristics of a resin such as significant improvement in elastic modulus is suppressed, and the resin can be easily formed into an optional structure such as a fiber, a film or the like. In addition, as the production method of the present invention, the phase separation accompanied with a chemical reaction will be excluded from the standpoint of being able to stably produce at low cost. It is as described above that the carbon material of the present invention is not limited to one by the production method of the present invention.

[Removal of Eliminable Resin]

It is preferable that the resin mixture in which a microstructure resulting from the phase separation has been fixed in the step 2, is subjected to removal of the eliminable resin before being subjected to the carbonization step (step 3), or simultaneously with the carbonization step, or in both thereof. Methods for the removal are not particularly limited, and any method may be employed so long as the eliminable resin can be removed thereby. Specifically, suitable methods include: a method in which the eliminable resin is chemically decomposed and lowered in molecular weight using an acid, alkali, or enzyme and is removed thereby; a method in which the eliminable resin is dissolved away by a solvent capable of dissolving the eliminable resin; and a method in which the eliminable resin is depolymerized using radiation, such as electron beams, gamma rays, ultraviolet rays, or infrared rays, or heat to thereby remove the eliminable resin.

Particularly, in the case where the eliminable resin can be removed by thermal decomposition, a heat treatment may be conducted beforehand at such a temperature that at least 80 wt% of the eliminable resin disappears, or the eliminable resin may be gasified by thermal decomposition and then removed in the carbonization step (step 3) or in the treatment for imparting infusibility described later. It is a more suitable embodiment that the method is selected in which the eliminable resin is gasified by thermal decomposition and then removed simultaneously with heat treatment in the carbonization step (step 3) or in the treatment for imparting infusibility described later, from the standpoint of reducing the number of steps to enhance the productivity.

[Treatment for Imparting Infusibility]

It is preferred that a precursor material being the resin mixture in which a microstructure resulting from the phase separation has been fixed in the step 2, is subjected to the treatment for imparting infusibility before being subjected to the carbonization step (step 3). Methods for the treatment for imparting infusibility are not particularly limited, and publicly known methods can be used. Specific examples of the methods include: a method in which the resin mixture is heated in the presence of oxygen to thereby cause oxidative crosslinking; a method in which the resin mixture is irradiated with high-energy rays such as electron beams or gamma rays to form a crosslinked structure; and a method in which the resin mixture is impregnated with or mixed with a substance having a reactive group to form a crosslinked structure. Among these methods, the method in which the resin mixture is heated in the presence of oxygen to thereby cause oxidative crosslinking is preferred because the process is simple and production cost can be kept low. These techniques can be used alone or in combination thereof, and the techniques may be used either simultaneously or separately.

The heating temperature in the method in which the resin mixture is heated in the presence of oxygen to thereby cause oxidative crosslinking is preferably 150°C or higher from the standpoint of causing the crosslinking reaction to proceed efficiently, and is preferably 350°C or lower from the standpoint of preventing the yield from being impaired by a weight loss due to the thermal decomposition, combustion, etc. of the carbonizable resin.

There are no particular limitations on oxygen concentration during the treatment; however, it is preferred to supply a gas having an oxygen concentration of 18% or higher, in particular, to supply air as it is, because use of such a gas makes it possible to reduce the production cost. Methods for supplying the gas are not particularly limited, and examples thereof include a method in which air is supplied as it is to the heating device and a method in which pure oxygen is supplied to the heating device using a bombe or the like.

Examples of the method in which the resin mixture is irradiated with high-energy rays such as electron beams or gamma rays to form a crosslinked structure include a method in which a commercially available electron beam generator or gamma ray generator is used to irradiate the carbonizable resin with electron beams or gamma rays to thereby induce crosslinking. A lower limit of the irradiation intensity is preferably 1 kGy or higher from the standpoint of efficiently introducing a crosslinked structure by the irradiation, and the irradiation intensity is preferably 1000 kGy or less from the standpoint of preventing the material strength from being deteriorated by a decrease in molecular weight due to cleavage of the main chain.

Examples of the method in which the resin mixture is impregnated with or mixed with a substance having a reactive group to form a crosslinked structure include: a method in which the resin mixture is impregnated with a low-molecular-weight compound having a reactive group, followed by heating or irradiating with high-energy rays to cause a crosslinking reaction to proceed; and a method in which a low-molecular-weight compound having a reactive group is mixed beforehand, followed by heating or irradiating with high-energy rays to cause a crosslinking reaction to proceed.

A suitable method is to conduct the removal of the eliminable resin simultaneously with the treatment for imparting infusibility, because the benefit of a cost reduction due to the reduction in the number of steps can be expected.

[Step 3]

The step 3 is a step of pyrolyzing and carbonizing the resin mixture in which a microstructure resulting from the phase separation has been fixed in the step 2, or the carbonizable resin in the case where the eliminable resin has been removed to thereby obtain a carbide.

It is preferred that the pyrolysis is conducted by heating the resin mixture to 600°C or higher in an inert gas atmosphere. The term "inert gas" herein means a gas which is chemically inert during the heating. Specific examples thereof include helium, neon, nitrogen, argon, krypton, xenon, and carbon dioxide. It is preferred from the standpoint of economical efficiency that nitrogen or argon is used among these. When the carbonization temperature is set to 1500°C or higher, it is preferred to use argon from the standpoint of inhibiting the formation of nitrides.

The flow rate of the inert gas is not limited so long as the oxygen concentration within the heating device can be sufficiently lowered, and it is preferred to appropriately select an optimal value in accordance with the size of the heating device, amount of the feed material to be supplied, heating temperature, etc. The upper limit of the flow rate is not particularly limited. However, it is preferred that the flow rate of the inert gas is appropriately set in accordance with a temperature distribution or the design of the heating device, from the standpoints of economical efficiency and of reducing temperature differences within the heating device. Furthermore, in the case where the gases which generate during the carbonization can be sufficiently discharged from the system, a carbon material having excellent quality can be obtained, and therefore this embodiment is more preferred. It is preferred from this to determine the flow rate of the inert gas so that the concentration of the generated gases in the system is 3000 ppm or less.

There is no upper limit on the temperature at which the resin mixture is heated. However, temperatures not higher than 3000°C are preferred from the standpoint of economical efficiency because the equipment requires no special processing. Further, in order to increase the BET specific surface area, the heating temperature is preferably 1500°C or lower, and more preferably 1000°C or lower.

With respect to heating methods in the case where the carbonization treatment is continuously performed, a method in which the material is continuously fed to and taken out from the heating device kept at a constant temperature, using rollers, conveyor, or the like is preferred because the productivity can be enhanced.

On the other hand, when a batch treatment is conducted in a heating device, there is no particular lower limit on the temperature raising rate and temperature lowering rate. The rates of 1°C/min or higher are preferred because the time period required for the temperature raising and temperature lowering can be shortened to thereby enhance the productivity. Further, upper limits of the temperature raising rate and temperature lowering rate are not particularly limited; however, it is preferred to employ as the upper limit on the temperature raising rate and temperature lowering rate a rate which is lower than the thermal shock resistance of the material that constitutes the heating device.

[Activation Treatment]

The carbide obtained in the step 3 is preferably activated as required. In the present invention, particularly when the specific surface area has to be increased, it is preferred to perform an activation treatment. A method of activation treatment is not particularly limited, and examples thereof include a gas activation method, a chemical activation method or the like. The gas activation method is a method in which oxygen, steam, carbon dioxide, or air is used as an activation agent and a carbide is heated at a temperature of 400°C to 1500°C, preferably 500°C to 900°C for several minutes to several hours to form fine pores. Further, the chemical activation method is a method in which as an activation agent, one or more of zinc chloride, iron chloride, calcium phosphate, calcium hydroxide, potassium hydroxide, magnesium carbonate, sodium carbonate, potassium carbonate, sulfuric acid, sodium sulfate, potassium sulfate and the like, are used and a carbide is heated for several minutes to several hours, and the resulting carbide is washed with water or hydrochloric acid as required, and dried after pH adjustment.

When the activation is made to proceed more or an amount of the activation agent to be mixed is increased, the BET specific surface area generally increases, and the pore size tends to increase. Further, the amount of the activation agent to be mixed is set to preferably 0.5 part by weight or more, more preferably 1.0 part by weight or more, and even more preferably 4 parts by weight or more with respect to 1 part by weight of an intended carbon raw material.

An upper limit is not particularly limited; however, it is commonly 10 parts by weight or less. Further, the pore size by the chemical activation method tends to be increased more than the pore size by the gas activation method.

In the present invention, the chemical activation method is preferably employed because it can increase the pore size and can increase the BET specific surface area. Particularly, a method of activating with an alkaline chemical such as calcium hydroxide, potassium hydroxide or potassium carbonate is preferably employed.

In the case of activation with the alkaline chemical, an amount of an acidic functional group tends to increase and it may be not preferred depending on applications. In this case, the acidic functional group can be reduced by heating the carbide in a nitrogen atmosphere or in a hydrogen or carbon monoxide atmosphere.

[Pulverization Treatment]

It is also a preferred embodiment that the electrode material of the present invention is formed into particles through a pulverization treatment after any of the above-mentioned steps. A conventionally publicly known method can be selected for the pulverization treatment and it is preferable to appropriately select the method in accordance with the particle size to be attained through the pulverization treatment and the treatment amount. Examples of the method for the pulverization treatment include a ball mill, bead mill, and jet mill. The pulverization treatment may be continuous or batchwise. The pulverization treatment is preferably continuous from the standpoint of production efficiency. The filling material to be filled into the ball mill is appropriately selected. It is preferable that a material based on a metal oxide, such as alumina, zirconia, or titania, or a material obtained by coating stainless steel, iron, or the like as cores with a nylon, polyolefin, fluorinated polyolefin, or the like is used for applications where inclusion of a metallic material is undesirable. For other applications, use of a metal such as stainless steel, nickel, or iron is suitably used.

It is also a preferred embodiment from the standpoint of increasing the efficiency of pulverization that a pulverization aid is used during the pulverization. The pulverization aid is selected arbitrarily from among water, alcohols, glycols, ketones, etc. Ethanol and methanol are preferred alcohols from the standpoints of ease of availability and cost, and in the case of using a glycol, ethylene glycol, diethylene glycol, propylene glycol or the like is preferable. In the case of using a ketone, acetone, ethyl methyl ketone, diethyl ketone or the like is preferable.

Sizes of particles of the carbide having undergone the pulverization treatment are leveled by classification and classified carbide can form a uniform structural body in, for example, a filling material or an additive to a paste. Hence, it is possible to stabilize the efficiency of filling and the step of paste application. Consequently, it can be expected to increase the production efficiency to attain a cost reduction. With respect to a particle diameter, it is preferred to appropriately select the diameter in accordance with applications of the carbide after undergoing a pulverization treatment.

[Step 4]

The step 4 is a step of causing the fine pores or voids of the carbon material thus obtained to contain sulfur. The above-mentioned substance can be used as the sulfur. A method of causing the pores or voids of the carbon material to contain sulfur is not particularly limited, and examples thereof include a method in which sulfur is brought into a vapor state or a liquid state and then filled into the pores or voids. For example, sulfur can be filled into the fine pores or voids by converting sulfur to a vapor by heating and/or pressurizing and adsorbing sulfur utilizing an adsorption power of the porous carbon. Further, it is also possible that sulfur is melted by heating and filled utilizing an adsorption power of the porous carbon or an osmotic pressure. In order to increase an amount of sulfur to be filled, it is also possible to operate so as to repeat depressurization and pressurization. Further, sulfur can also be filled by a method in which sulfur is filled in the form of a sulfur solution using a solvent, a vapor-phase epitaxial method, or the like

EXAMPLES

Hereinafter, preferred examples of the present invention will be described. These descriptions should not limit the present invention at all.

<Evaluation Technique>

[Structural Period of Co-Continuous Structure Portion]

(1) X-ray Scattering Method

A carbon material was sandwiched between specimen plates, and the position of a CuK$\alpha$ line source and the positions of the specimen and a two-dimensional detector were regulated so that information on scattering angles less than 10 degrees was obtained from the X-ray source obtained from the CuK$\alpha$ line source. From the image data (brightness information) obtained from the two-dimensional detector, the data on the central portion which had been affected by a beam stopper were excluded. Radius vectors from the beam center were set, and the values of brightness for the range of 360° at angular intervals of 1° were summed up to obtain a scattered-light-intensity distribution curve. From the scattering angle θ corresponding to the local maximum value of a peak in the curve obtained, the structural period L of the co-continuous structure portion was obtained using the following equation.

(2) X-ray CT Method

When the structural period was 1 μm or more and the peak of X-ray scattering intensity was not observed, a continuously rotating image was taken with 0.3° step in a range of not less than 180° using an X-ray microscope to obtain a CT image. The obtained CT image was subjected to Fourier transformation to give a graph of scattering angle θ and scattered-light intensity, a scattered-light-intensity distribution curve, and the structural period L of the co-continuous structure portion was then obtained using the following equation in the same method as above.

$$L = \lambda/(2\sin\theta)$$

Structural period: L, λ: wavelength of incident X-rays, θ: scattering angle corresponding to a local maximal value of peak values of the scattering intensity

[Average Porosity]

A carbon material was embedded in a resin, and a cross-section of the electrode material was thereafter exposed by using a razor blade or the like. Using SM-09010, manufactured by JEOL Ltd., the specimen surface was irradiated with argon ion beams at an accelerating voltage of 5.5 kV to etch the surface. A central part of the resultant cross-section of the carbon material was examined with a scanning secondary-electron microscope at a magnification regulated so as to result in $1 \pm 0.1$ (nm/pixel) and at a resolution of 700000 pixels or higher, and a square examination region for calculation in which each side had 512 pixels was set in the resulting image. The average porosity was calculated using the following equation, in which A was the area of the examination region and B was the area of the pores or embedded portion.

$$\text{Average porosity (\%)} = B/A \times 100$$

[BET Specific Surface Area, Fine Pore Diameter]

Using, "BELSORP-18PLUS-HT" manufactured by MicrotracBEL Corp., a specimen was deaerated at 300°C for about 5 hours under a reduced pressure, and then nitrogen adsorption-desorption of the specimen at a temperature of 77 K was measured by a multipoint method using liquid nitrogen. The specific surface area measurement was performed by a BET method and pore distribution analysis (pore diameter, pore volume) was performed by a MP method or a BJH method.

[Example 1]

Into a separable flask were introduced 70 g of polyacrylonitrile (Mw: 150000, carbon yield: 58%) manufactured by Polysciences, Inc., 70 g of polyvinylpyrrolidone (Mw: 40000) manufactured by Sigma Aldrich Co., Ltd., and 400 g of dimethyl sulfoxide (DMSO) manufactured by Wakenyaku Co. Ltd., as a solvent, and the contents were heated at 150°C for 3 hours with stirring and refluxing, thereby preparing a uniform and transparent solution. In this solution, the concentration of the polyacrylonitrile and the concentration of the polyvinylpyrrolidone were 13 wt% each.

The DMSO solution obtained was cooled to 25°C and then ejected at a rate of 3 mL/min from a one-orifice nozzle having an orifice diameter of 0.6 mm, and the extrudate was led into a pure-water coagulating bath kept at 25°C, subsequently taken off at a rate of 5 m/min, and accumulated in a vat to thereby obtain raw fibers. In this operation, an air gap was set at 5 mm, and the length of immersion in the coagulating bath was 15 cm. The raw fibers obtained were translucent and had undergone phase separation.

The raw fibers obtained were dried for 1 hour in a circulating dryer kept at 25°C, thereby removing the water present on the fiber surface. Thereafter, vacuum drying was conducted at 25°C for 5 hours to obtain dried raw fibers as a precursor material.

The raw fibers as a precursor material were thereafter introduced into an electric furnace kept at 250°C and heated in an oxygen atmosphere for 1 hour, thereby performing a treatment for imparting infusibility. The raw fibers which had undergone the treatment for imparting infusibility changed to black in color.

The infusible raw fibers obtained were subjected to a carbonization treatment under the conditions of a nitrogen flow rate of 1 L/min, temperature raising rate of 10°C/min, maximum temperature of 850°C, and holding time of 1 minute, thereby obtaining carbon fibers having a co-continuous structure. A cross-section of the carbon fiber was observed, and consequently a fiber diameter was 155 $\mu$m, and a thickness of a portion which was formed on the fiber surface and does not have the co-continuous structure was 5 $\mu$m. Furthermore, an even co-continuous structure was formed in the fiber center part.

Then, the carbon fibers were pulverized using a ball mill, and then potassium hydroxide was mixed in an amount of 4 times as large as the carbide, and the resulting mixture was charged into a rotary kiln and heated to 800°C under a nitrogen flow. After the mixture was subjected to the activation treatment for 1.5 hours, the mixture was cooled and washed with water and a dilute hydrochloric acid until a wash solution reaches a pH of around 7. In the resulting carbon particles, the average porosity of the co-continuous structure portion was 40% and the structural period was 79 nm. Further, the carbon particle has a structure in which the portion not having the co-continuous structure is contained in part of the particle. The BET specific surface area was 2080 m$^2$/g, the average diameter of the fine pores measured by the MP method was 0.6 nm, and the pore volume was 2.0 cm$^3$/g.

Next, sulfur was added to the carbon particles in an amount of 1.2 times as large as the carbon particles, and the resulting mixture was heated at 155°C while kneading the mixture. Then, a PTFE powder as a binder was added, and the resulting mixture was kneaded well and formed into a sheet to obtain a positive electrode.

On the other hand, a lithium metal plate was used for the negative electrode, and cells for evaluation were prepared using an electrolytic solution and a separator which are commercially available. The results are shown in Table 1.

[Comparative Example 1]

Both copolymers are mixed which consist of 60 wt% of an acrylonitrile copolymer (PAN copolymer) composed of 98 mol% of acrylonitrile and 2 mol% of methacrylic acid and having a specific viscosity of 0.24, and 40 wt% of a thermally degradable copolymer (PMMA) composed of 99 mol% of methyl methacrylate and 1 mol% of methyl acrylate and having a specific viscosity of 0.21, and the resulting mixture was dissolved in dimethylformamide (DMF) as a solvent so that a concentration of a solution of the mixture of the both copolymers was 24.8 wt% to obtain a DMF mixed solution. The obtained solution was uniform by visual observations, but when the solution was observed with an optical microscope, liquid drops were observed and phase separation had already proceeded at the stage of the solution.

Using the DMF mixed solution, spinning, imparting infusibility, and a carbonization treatment were performed by the same method as in Example 1 to obtain carbon fibers. The obtained carbon fibers had a cross-section in which a pore shape and size are not uniform. Further, calculation of the structural period was tried, but in the resulting spectrum, the peak did not exist and uniformity of a structure was inferior. Then, using a ball mill, the carbon fibers were pulverized and then formed into carbon particles without undergoing an activation treatment.

Next, sulfur was filled in the same manner as in Example 1 to prepare a positive electrode. Further, an electrode similar to that of Example 1 was used for the negative electrode. The results are shown in Table 1.

[Table 1]

| | | Example 1 | Comparative Example 1 |
|---|---|---|---|
| Continuous Void Structure | Presence/Absence | present | absent |
| | Structural Period (nm) | 79 | - |
| | Average Porosity (%) | 40 | - |
| BET Specific Surface Area (m$^2$/g) | | 2080 | 30 |
| Fine Pore | Average Diameter (MP method) (nm) | 0.6 | 16 |
| | Pore Volume (MP method) (cm$^3$/g) | 2.0 | 0.1 |
| Battery Characteristics | Discharge Capacity (mAh/g) | 1100 | 400 |

**Claims**

1. An electrode material containing sulfur, and a carbon material having a co-continuous structure portion in which a carbon skeleton and voids form a continuous structure and having fine pores having a diameter of 0.01 nm to 10 nm present at the surface; wherein a structural period L of the co-continuous structure portion of the carbon material is 0.002 $\mu$m to 3 $\mu$m; a pore volume of the carbon material is 0.5 cm$^3$/g or more; and a BET specific surface area of the carbon material is 300 m$^2$/g or more; wherein the pore diameter, the structural period, the pore volume and the BET specific surface area are each measured for the carbon material according to the methods of the description.

2. A lithium-sulfur battery electrode which uses the electrode material according to claim 1.

3. A lithium-sulfur battery which uses the lithium-sulfur battery electrode according to claim 2.

4. An electrode material production method for producing an electrode material according to claim 1, the method comprising in the following order:

a step 1 of bringing 10 to 90 wt% of a carbonizable resin and 90 to 10 wt% of an eliminable resin into a compatibly mixed state by dissolving them in the same solvent to obtain a resin mixture;
a step 2 of causing the resin mixture in a compatibly mixed state to undergo phase separation and fixing the separated phases;
a step 3 of carbonizing the fixed resin mixture by pyrolysis; and
a step 4 of causing a carbonized product to contain sulfur,
wherein removal of the eliminable resin is performed between the step 2 and step 3, or simultaneously with the step 3.

5. The electrode material production method according to claim 4, wherein the carbonizable resin contains polyacrylonitrile.

**Patentansprüche**

1. Elektrodenmaterial, das Schwefel und ein Kohlenstoffmaterial enthält, das einen cokontinuierlichen Strukturabschnitt, in dem ein Kohlenstoffgerüst und Lücken eine kontinuierliche Struktur bilden, und feine Poren mit einem Durchmesser von 0,01 nm bis 10 nm an der Oberfläche aufweist; wobei die Strukturperiode L des cokontinuierlichen Strukturabschnitts des Kohlenstoffmaterials 0,002 $\mu$m bis 3 $\mu$m beträgt; das Porenvolumen des Kohlenstoffmaterials 0,5 cm$^3$/g oder mehr beträgt; und die spezifische BET-Oberfläche des Kohlenstoffmaterials 300 m$^2$/g oder mehr beträgt;
wobei der Porendurchmesser, die Strukturperiode, das Porenvolumen und die spezifische BET-Oberfläche des Kohlenstoffmaterials jeweils gemäß den Verfahren in der Beschreibung gemessen werden.

2. Lithium-Schwefel-Batterieelektrode, in der ein Elektrodenmaterial nach Anspruch 1 zum Einsatz kommt.

3. Lithium-Schwefel-Batterie, in der eine Lithium-Schwefel-Batterieelektrode nach Anspruch 2 zum Einsatz kommt.

4. Elektrodenmaterial-Herstellungsverfahren zur Herstellung eines Elektrodenmaterials nach Anspruch 1, wobei das Verfahren Folgendes in der folgenden Reihenfolge umfasst:

einen Schritt 1 des Überführens von 10 bis 90 Gew.-% eines carbonisierbaren Harzes und 90 bis 10 Gew.-% eines entfernbaren Harzes in einen kompatibel vermischten Zustand, indem sie in demselben Lösungsmittel gelöst werden, um ein Harzgemisch zu erhalten;
einen Schritt 2 des Bewirkens, dass das Harzgemisch im kompatibel vermischten Zustand eine Phasentrennung erfährt, und des Fixierens der getrennten Phasen;
einen Schritt 3 des Carbonisierens des fixierten Harzgemischs mittels Pyrolyse; und
einen Schritt 4 des Bewirkens, dass das carbonisierte Produkt Schwefel enthält, wobei das Entfernen des entfernbaren Harzes zwischen Schritt 2 und Schritt 3 oder gleichzeitig mit Schritt 3 durchgeführt wird.

5. Elektrodenmaterial-Herstellungsverfahren nach Anspruch 4, wobei das carbonisierbare Harz Polyacrylnitril enthält.

**Revendications**

1. Matériau d'électrode contenant du soufre et un matériau de carbone ayant une partie de structure co-continue où un squelette de carbone et des vides forment une structure continue et ayant des pores fins ayant un diamètre de 0,01 nm à 10 nm présents au niveau de la surface ; dans lequel une période structurelle L de la partie de structure co-continue du matériau de carbone est de 0,002 $\mu$m à 3 $\mu$m ;
un volume de pores du matériau carboné est de 0,5 cm$^3$/g ou plus ; et
une surface spécifique BET du matériau carboné est de 300 m$^2$/g de plus ;
dans lequel le diamètre de pore, la période structurelle, le volume de pores et la surface spécifique BET sont mesurés chacun pour le matériau carboné selon les procédés de la description.

2. Electrode de batterie au lithium-soufre qui utilise le matériau d'électrode selon la revendication 1.

3. Batterie au lithium-soufre qui utilise l'électrode de batterie au lithium-soufre selon la revendication 2.

4. Procédé de production de matériau d'électrode pour produire un matériau d'électrode selon la revendication 1, le procédé comprenant dans l'ordre suivant :

une étape 1 consistant à amener 10 à 90 % en poids d'une résine carbonisable et 90 à 10 % en poids d'une résine éliminable dans un état de mélange compatible en les dissolvant dans le même solvant pour obtenir un mélange de résines ;
une étape 2 consistant à amener le mélange de résines dans un état mélangé de manière compatible à subir une séparation de phases et à fixer les phases séparées ;
une étape 3 de carbonisation du mélange de résines fixé par pyrolyse ; et
une étape 4 consistant à amener un produit carbonisé à contenir du soufre,
dans lequel l'élimination de la résine éliminable est effectuée entre l'étape 2 et l'étape 3, ou en même temps que l'étape 3.

5. Procédé de production de matériau d'électrode selon la revendication 4, dans lequel la résine carbonisable contient du polyacrylonitrile.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003197196 A
- JP 2013143298 A
- JP 2013118191 A

- WO 2012131628 A
- US 20120251889 A
- US 20140057179 A

### Non-patent literature cited in the description

- **ZHANG et al.** described a battery cathode material composite prepared by encapsulating sulfur into micropores of carbon spheres. *Energy Environ. Sci.,* 2010, vol. 3, 1531-1537

- *J. Amer. Chem. Soc.,* 1951, vol. 73, 373
- *Journal of Colloid and Interface Science,* 1968, vol. 26, 45